# NEW EUROPEAN PATENT SPECIFICATION

(11) **EP 3 162 841 B2**
(45) Date of publication and mention of the opposition decision: **15.06.2022**
(45) Mention of the grant of the patent: 21.03.2018
(21) Application number: 15191595.6
(22) Date of filing: 27.10.2015
(51) Int. Cl.: C08J 3/20

(54) **A BIODEGRADABLE BIOCOMPOSTABLE BIODIGESTIBLE PLASTIC**
BIOLOGISCH ABBAUBARER, BIOKOMPOSTIERBARER, BIODIGESTIERBARER KUNSTSTOFF
PLASTIQUE BIODIGESTIBLE, BIOCOMPOSTABLE, BIODEGRADABLE

(43) Date of publication of application: 03.05.2017
(73) Proprietor: PEP Licensing Limited, Kowloon (HK)
(72) Inventor: SRINIVASAN IYER, Ravi, 440016 Nagpur (IN); BHARJ, Narinder, SG5 4AQ Stotfold Hitchin, Herts (GB); RADHAKRISHNA, Ammanamanchi, 440016 Nagapur (IN)
(74) Representative: ZBM Patents - Zea, Barlocci & Markvardsen

(56) References cited:
- WO-A1-2014/167518
- WO-A1-2014/194219
- US-B2- 7 235 594
- Material Safety Data Sheet for "Enzymopast® - ENZ00900"
- Material Safety Data Sheet for "Enzymopast® - ENZ00001
- Adolf Franck, Kunststoff-Kompendium, p. 304, Vogel Verlag, 2000.
- "Written evidence submitted by Advanced Enzyme Science Limited, 21 January 2014.
- Batham et al., Implementation of Bulking Agents in Composting: A Review. J Bioremed Biodeg 2013, 4:7
- Press release
- CAS Registry reference of CAS No.73049-73-7 (post-publishedevidence)
- Merk webpage, products with CAS No.73049-73-7 (post¬published evidence)
- CAS Registry reference of CAS No. 910719-40-2 (post-published evidence)
- Sizer, Effects of temperature on enzyme kinetics, Chapter III, page 41 -42, from Advances in Enzymology and related areas of Molecular Biology, Volume 3, 1943.
- Winnick et al, Physicochemical Properties of the Proteolytic Enzyme from the latex of the milkweed, Asclepias Speciosa Torr. Some Comparisons with other Proteases. III. Kinetics of the Heat Inactivation of Papain, Bromelin, and Asclepain. J Gen Physiol. 1940, 23(3):301-8.
- Deka et al, Purification and Characterization of an Alkaline Cellulase Produced by Bacillus Subtilis (AS3), Preparative Biochemistry & Biotechnologv. 43. 2013. page 256-270.
- Proof of publication date of D4 is established by the document "REVIEW OF INFORMATION ON ENZYME-MEDIATED DEGRADABLE PLASTICS", dated 20 May 2014
- Printout of a top portion of the linked parliamentary website
- HDPE bags, at the request of Bioplast Technologies India Pvt. Ltd., were subject of a biodegradability certification as evidenced bv a certificate dated 18 February 2007
- Results of tests conducted in the course of the certification
- Clip from the Times of India, dated 16 February 2009
- Invoices
- Information published on the website of Bioplastic Technologies India: https.//www.indiamart.com/bioplasticindia/ aboutus.html.19 December 2018
- Certificate of Incorporation dated 14th August 2012

## Description

### FIELD OF INVENTION

This invention relates to a biodegradable biocompostable biodigestible polyolefin polymer and a process for preparation thereof.

### BACKGROUND/PRIOR ART

Plastics are manufactured from petroleum namely polyethylene's, polypropylenes, which takes several years to degrade in the environment and therefore pollute water, soil and air.

Environmental degradation of synthetic polymers occurs at varying rates and to varying degrees depending on the characteristics of polymer and its environment. Such degradations are catalyzed by light, heat, air, water, microorganisms, and mechanical forces such as wind, rain, vehicular traffic, etc. Enhancing the stability and/ or the degradability of polymers is generally accomplished by additives, changing the polymer backbone, introduction of functional groups, or by blending with appropriate fillers to make the polymer/plastic material from hydrophobic to hydrophilic material. However, many of these techniques for degradation also result in detrimental properties for the polymer products.

Petroleum based synthetic polymers/plastics to overcome the problems and limit of natural material owing to its excellent physical properties, light weight and cost effectiveness, plasticity is one of the modern scientific characteristics established by developing various hydrophilic polymers, especially hydrophilic plastic. However, each country in the present world is preparing for diversified counter measures as pollution problems from numerous plastic products are globally getting serious and it becomes a challenging matter to solve such pollution problems arising out of plastic wastes.

Recycling, incineration and landfill have been mainly used to solve these environmental pollution problems caused by various solid wastes, including plastic. However, disposal of wastes through landfill as well as recycling cannot solve the environmental pollution problems completely owning to its inherent problems.

Accordingly,great interest and studies on development of biodegradable and/or biocompostable plastic which can degrade itself at the life cycle end are increasing recently. The technology on degradable plastic is divided into photodegradable, oxo-degradable, oxo-biodegradable, biodegradable, bio-photodegradable and a combination of photo- and/or oxo and/or biodegradable plastic formulation technologies which are increasing recently on the industrial scale of manufacturing.

While there are many kinds of biodegradable plastic, for example microorganism producing polymers like PHB (poly-βαα -hydroxybutylate), polymers using microorganism producing biochemical, or polymers having natural polymer like chitin or starch. The problems which are concerned with the present technology about polymers having various additives such as starch have been mentioned and improvements are described in the literature.

U.S. Pat. No.4, 021,388 by G. J. L. Griffin is directed to a process for preparing biodegradable film improved by treating the surface of starch with silane coupling agent to be hydrophobic, but it only increases physical interacting strength a little between matrix resin and starch. However, it has difficulty to solve the problem of degradation in the physical properties of films upon incorporating starch.

While U.S. Pat. Nos. 4,133,784 and 4,337,181 filed by F. H. Otey et. al. of USDA disclose processes for preparing biodegradable films by adding α-starch to ethylene-acrylic copolymer.It has difficulty to generalize for the high price of ethylene-acrylic copolymer and lowering of physical properties of the produced films.

Korean Patent Publication Nos. 90-6336 and 91-8553 filed by Seonil Glucose Co., Korea are related to processes for increasing physical interacting strength between matrix resin and starch by increasing hydrophobic property of starch or increasing hydrophilic property of matrix resin to increase compatibility with matrix resin and starch.

US patent 5281681A describes photodegradable and biodegradable polyethylene formulation by co-processing ethylene and 2-methylene-1,3-dioxepane (MDOP) to produce terpolymer which exhibits better photodegradability than the copolymer, because the additional carbonil groups in the polymer cleave upon absorbing light such as sunlight or UV light. The terpolymer can be both photodegradable and biodegradable because both the ester and the carbonyl functionalize.

US patent 5461094A describes biodegradable polyethylene composition chemically bonded with starch and a process for preparing thereof.

Therefore, it is required to provide high yield Peptide-polyethylene herein referred to as PEPlene, having good biodegradability/biocompostability/biodigestion in the environment.

### OBJECTS OF THE INVENTION

An object of this invention is to propose a process for the preparation of a biodegradable biocompostable biodigestible polyolefin polymer which overcomes disadvantages associated with the prior arts.

Another object of this invention is to propose a process for the preparation of a biodegradable biocompostable biodigestible polyolefin polymer which improves polymer biodegradability/biocompostability /biodigestion without the loss of physical strength, structural characteristics and also being recyclable in the main recycling stream should the opportunity arise without affecting the stream.

Further object of the present invention is to propose a process for the preparation of a biodegradable/biocompostable /biodigestible polyolefin polymer which is cost effective.

Yet another object of this invention is to propose a process for the preparation of a biodegradable /biocompostable/ biodigestible polyolefin polymer which is environment friendly.

### SUMMARY OF INVENTION

The present invention relates to a process for the preparation of a biodegradable/biocompostable/biodigestible plastic comprising the steps according to claim 1. The present invention discloses a Biodegradable/ Biocompostable /Biodigestible polyolefin polymer products such as market carry bags, mulch film for agricultural use, packing films etc., to name a few plus replace the normal polyolefin polymers by incorporating biodegradable/biocompostable/biodigestible additives in the polymer processing to render them biodegradable/biocompostable/biodigestible. Thus, a polyolefin polymer formulation has been developed by incorporating natural peptides / enzyme/ protein from edible source to make non-biodegradable polyolefin polymer namely the polyolefin such as polyethylene, polypropylene and their different grades as Biodegradable/Biocompostable/Biodigestible polyolefin polymer.

Thus the present invention describes a biodegradable/biocompostable/biodigestible polyolefin film prepared by chemical bonding of peptides/ enzyme/ protein and other additives with an example of polyethylene chains, which is a polyolefin having the most widest general application, and a process for preparing thereof. The same can be the process technology for the other polyolefin's such as polypropylene etc.

### BRIEF DESCRIPTION OF THE ACCOMPANYINGDRAWINGS

Further objects and advantages of this invention will be more apparent from the ensuing description when read in conjunction with the accompanying drawings of exemplary embodiments of invention and wherein:
**Fig. 1****: Environmental Biodegradation of the PEPlene film.**
**Fig.2****: 150 Days Environmental Soil Biodegradation of the PEPlene film.**
**Fig.3****: FTIR indicating the peptides/enzyme/protein incorporation in the PEPlene Master Batch.**
**Fig.4****: FTIR indicating the peptides/enzyme/protein incorporation in PEPlene film**
**Fig.5****: PEPlene Percentage Degree of Biodegradation**

### DETAIL DESCRIPTION OF THE INVENTION WITH REFERENCE TO THE ACCOMPANYINGDRAWINGS

The instant invention makes a disclosure in respect of biodegradable biocompostable biodigestible polyolefin polymer and a process for preparation thereof.

Accordingly, the Present invention provides a process for composition for accelerating the biodegradation/biocompostability/ biodigestion of polyolefin polymer materials.

The process comprises preparing a composition by combing at least one peptide, protein and enzyme, and a composting agent. This is followed by blending with at least one polyolefin polymer in the presence of additive preferably at a temperature of 45-300°C so as to retain the essential catalytic properties and nature of the peptides / enzyme/ protein.

The composition thus obtained can be directly used or encapsulated in a polyolefin polymer constituting a coated composition or in liquid form. Various examples of above ingredients can be listed herein below:
Enzyme - cellulase, papain, but not restricted to the examples herein.
Protein - milk, vegetable.(Soya bean, lady finger). But not restricted to the examples herein.
Composting Agent - carboxy methyl cellulose, hydrolyzed mutton tallow. But not restricted to the examples herein.
Polyolefin polymer - polyethylene, which can be at least one of linear low density polyethylene (LLDPE), high density polyethylene (HDPE), low density polyethylene (LDPE) medium density polyethylene, ethylene vinyl acetate (EVA) and ethylene butyl acrylate (EBA)and any combination thereof.
Additive- citric acid, lactic acid bacillus, hydrolyzed mutton tallow, yeast and any combination thereof to improve biodegradation/ biocompostability/ biodigestion properties of polyolefin polymeric material.

The natural components of the composition disclosed herein are food grade materials. This can also include other carbohydrates such as lactose, starch etc.

The present invention leads to reduction in production cost owing to simplification in the process for preparation of the composition. It avoids the problem of degradation in the physical properties of film by enhancing solely physical interacting strength between matrix resin and peptides/ enzyme/ protein and added additives referred above.

Further it is disclosed that a biodegradable/biocompostable /biodigestible polyethylene composition can be chemically bonded with starch.

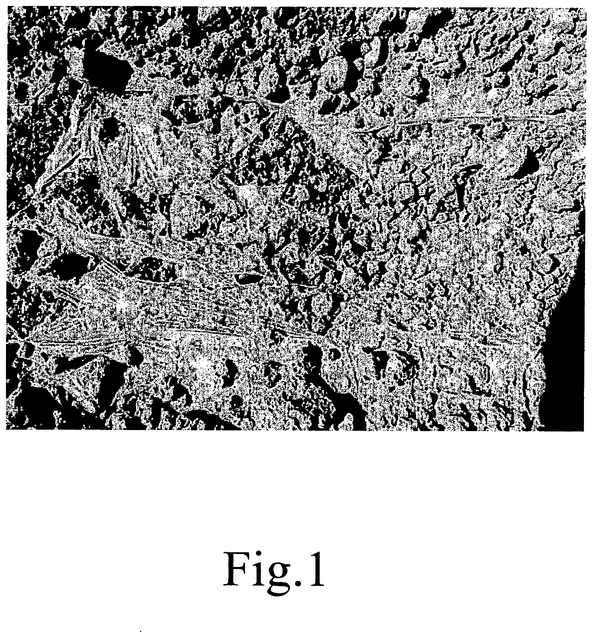

The composition of PEPlene has molecular weight of at least about 7000 with good biodegradable/ biocompostable/ biodigestible characteristics fig.1.

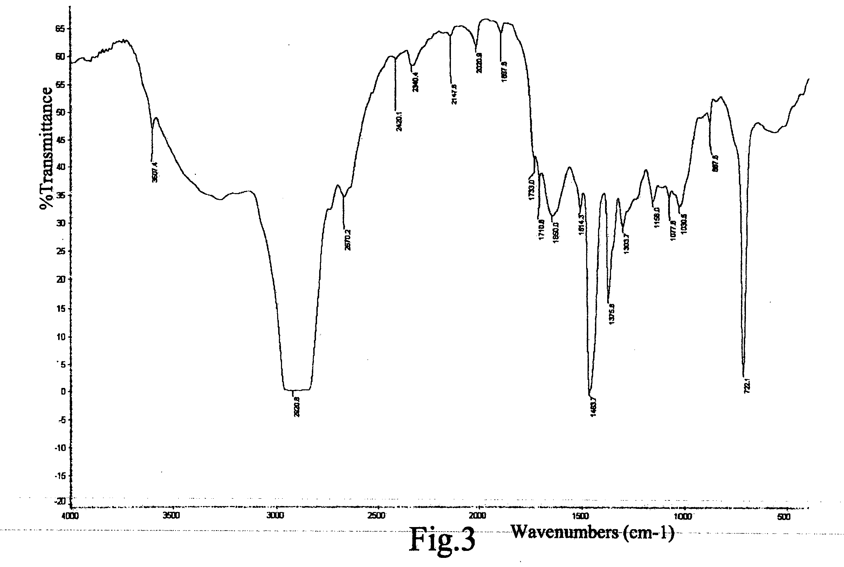

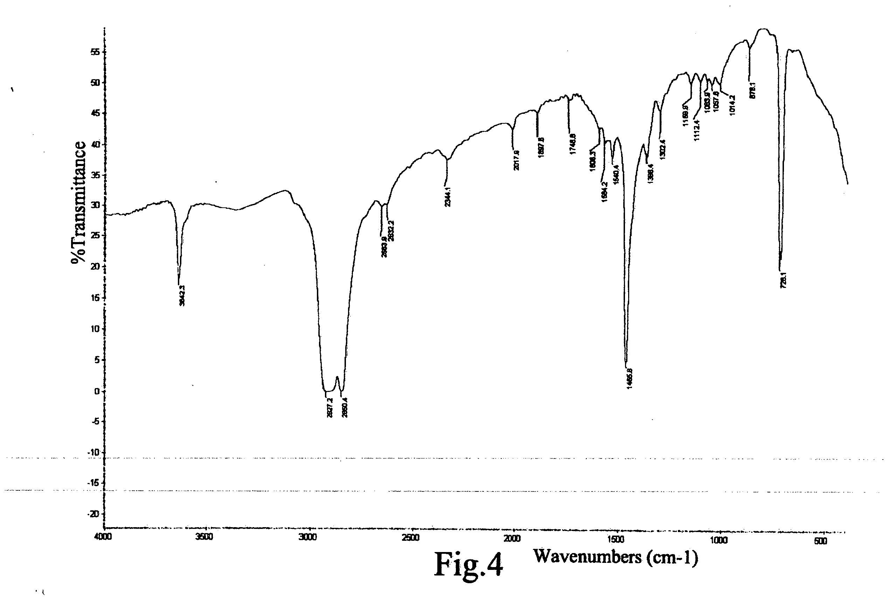

In polyolefin polymer, x, y and z in space integers of the peptide/ enzyme / protein groups such as carboxyl are randomly or uniformly distributed in the polymer along the backbone of the polyethylene polymer, according to the varying concentrations of the functional groups **Figure 3** **and** **4****.**

The blend of polyolefin polymer composition is subjected to extrusion at a temperature of about 100 - 350°C. So that during the extrusion process, the composition infuses or penetrates into the cells or molecular structure of the polymer while the polymer is in a pre-molten state. The polyolefin polymer products obtained from the present process include secondary packaging/plastic films, vest bags, bin liners, rubbish bags, agricultural mulch, and many other types of films. The present blend of composition is also suitable for the polymers e.g. 3D printing, fiber spun, and nonwoven material using injection molding and melted spun process technologies to name a few.

The mechanisms of biodegradation may include the following stages:
**Action:** Peptide/enzyme / protein help to introduce the hydrophilicity in the chains of the polymer. While the polymer is in the pre-molten state during the process of extrusion the Peptide/ enzyme / protein penetrates into the polymer so as to enable the hydrophilicity in the polymer formulation.
**Thermal degradation:** The hydrophilic nature polyolefin polymer is processed further into a polymer film which undergoes a thermal degradation or breakdown into smaller fragments, under laboratory conditions this takes place due to temperature conditions and the moisture in the environment and also due to light and oxygen.
**Soil action:** After thermal degradation (either in laboratory conditions or in the natural environment) the presence of peptide/ enzyme/ protein in the composition of the present invention due to hydrophilic nature attracts soil microorganisms which attack the polyolefin polymer. Inherent moisture in the polymer formulation due to hydrophilicity of the composition and/ or moisture in the soil (for example 58% moisture) enables the chain links of the polymer, already in a separated or weakened molecular state, to undergo a natural composting process wherein the products of depolymerisation provide nutrients for the soil microorganisms and the remaining products to become biomass.
**Degradation:** The ultimate products of biodegradation include carbon dioxide and water due to the microbial metabolism of the polyolefin polymer.

In one example, the enzyme compositions of the present invention are blended with a pulverized co-polymer i.e. LLDPE. Polyethylene used for the manufacturing of films for secondary packaging like vest bags, bin liners, rubbish bags, agricultural mulch films need the co polymer LLDPE both for elasticity and scalability of the film. The presence of peptide/ enzyme/ proteins and other additives in the polyethylene attracts the soil microorganisms to act on the composted material. The residue is biomass, water and carbon dioxide. However, in the present PEPlene polymer the biodegradation residues are carbon dioxide and water.

Other products resulting from biodegradation or bio-refining include gases(e.g. Methane), Ketones (e.g. Acetone) and alcohols (e.g. Methanol, Ethanol, Propanol, and Butanol). Products such as Methane and Ethanol are known sources of energy and it is envisaged that these, or other resulting products, may be captured for further use, such as to act as energy sources.

One advantage of the present invention is that the polyolefin polymer products obtained by the present invention retain the desired mechanical properties and shelf life plus recycling of polymers equal to the non-biodegradable polymer - example polyethylene.Unlike the photo-oxidative or oxodegradable agents which initiate the degradation of the Polymer spontaneously and their-by reduce the shelf life of the polymer products, enzymatically initiated biodegradation/ biocompostability/biodigestion process begins only upon exposure to microbes in the environment as life cycle end.

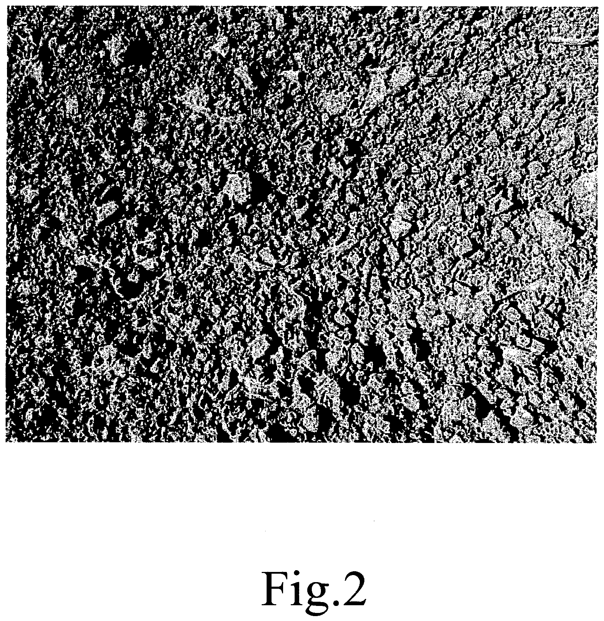

The PEPlene films prepared using the peptide/ enzyme /protein composition either by directly dispersed or encapsulated in the present invention have been successfully tested as per ASTMD 5988, ISO 14855, ISO 17556 and EN 13432/ ASTM D6400 (and other national equivalents) test protocols for bio degradability and Eco toxicity and plant germination capability of the soil in which these films biodegrade. For example, EN protocols for cellulose based products require greater than 90% degradation within 180 days. Products disclosed herein start to degrade from 90 days under composting conditions **Figure 1** **and** **2****.** Speed of degradation is generally affected by environmental microbial conditions, the amount of peptide/ enzyme /protein composition and the thickness of the product. By way of example, degradation of products prepared according to the present invention has been achieved with extruded film of 5 - 50 microns thickness.

Accordingly, a further advantage of the present invention is that the compositions comprise natural and food grade materials and leave no toxic residues after biodegradation and/or are within the heavy metal limits as prescribed by various countries for the plastic material/products.

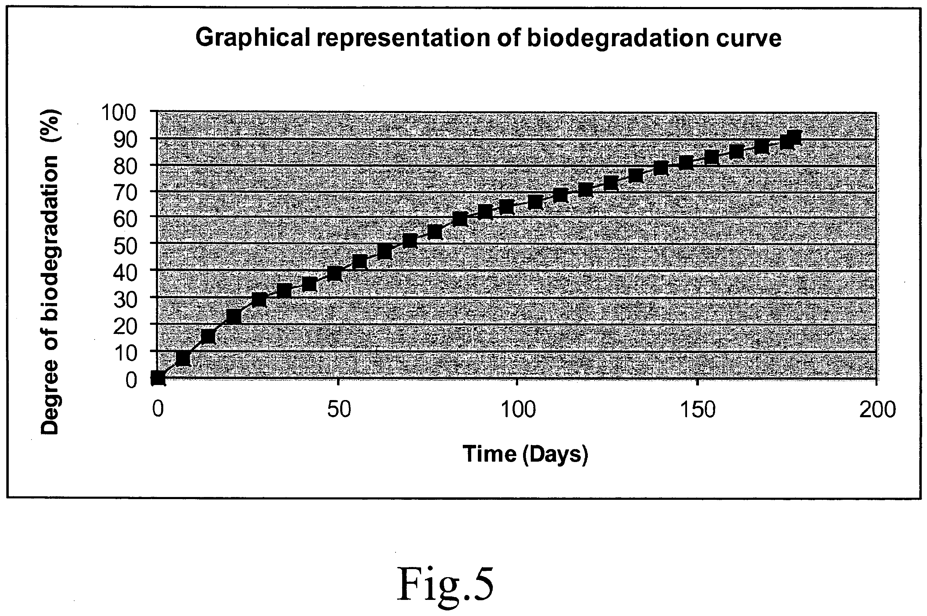

The disclosed product is also recyclable in accordance with ASTM D 7209 protocol and EN 15347; The disclosed product is also compostable according to standard EN 13432; and biodegradable according to standards ASTM D 5988, ISO 14855, ISO 17556 and EN 13432/ ASTM D6400 (and other national equivalents) test protocols for biodegradability **Figure 5****.**

Also, the present invention evaluated under US FDA177.1520 for food contact safety compliance.

A further advantage of the present invention is that the materials prepared according to the process of the invention biodegrade when subjected to suitably environmental conditions. The product PEPlene films disclosed herein are also stable until disposal, such as into soil, compost, landfill, bio-digester or the like and under anaerobic conditions. The materials are able to be metabolized into biomass by the colony forming bacterial groups present in the compositions disclosed herein and the microorganisms available in the soil.

The compositions disclosed herein with polyolefin such as polyethylene under aerobic conditions have shown that it is possible to subject poly films to complete biodegradation and bio-compostable by oxidative microbial attack.

## Claims

1. A process for the preparation of a biodegradable/ biocompostable/biodigestible plastic comprising steps of:
- Mixing at least one peptide, protein which is selected from vegetable and milk protein and enzyme which is selected from papain and cellulase,
- Adding a composting agent,
- Blending with at least one polymer in presence of additive to obtain said plastic, wherein the polymer is a polyolefin, wherein the additive includes citric acid, lactic acid bacillus, hydrolyzed mutton tallow, yeast and any combination thereof, wherein said blending is carried out at a temperature of 45-300°C so as to retain the essential catalytic properties and nature of the peptide/ enzyme /protein in the solid or liquid form, and
wherein the blend is further subjected to extrusion at a temperature of 100-350°C.

2. A process for the preparation of a biodegradable biocompostable biodigestible plastic as claimed in claim 1 wherein the enzyme is papain.

3. A process for the preparation of a biodegradable biocompostable biodigestible plastic as claimed in any of the preceding claims wherein said protein is a vegetable protein selected from soya bean and ladyfingers.

4. A process for the preparation of a biodegradable biocompostable biodigestible plastic as claimed in any of the preceding claims wherein the compositing agent is such as carboxymethyl cellulose.

5. A process for the preparation of a biodegradable biocompostable biodigestible plastic as claimed in any of the preceding claims wherein the polyolefin polymer comprises polyethylene which is selected from linear low density polyethylene (LLDPE), high density polyethylene (HDPE) and low density polyethylene (LDPE), medium density polyethylene (MDPE), ethylene vinyl acetate (EVA), ethylene butyl acrylate (EBA) and any combination thereof.

6. A process for preparation of biodegradable/biocompostable/biodigestible plastic as claimed in any of the preceding claims wherein the plastic products obtained from the process include secondary packaging/plastic films, vest bags, bin liners, rubbish bags, agricultural mulch films, polymer fibers, nonwoven spun materials.

## Patentansprüche

1. Ein Verfahren zur Herstellung eines biologisch abbaubaren/biokompostierbaren/biodigestierbaren Kunststoffs umfassend folgende Schritte:
- Mischen von mindestens einem Peptid, Protein, welches aus pflanzlichem Protein und Milchprotein ausgewählt ist und Enzym, welches aus Papain und Cellulase ausgewählt ist,
- Hinzufügen eines Kompostierungsmittels,
- Vermischen mit mindestens einem Polymer in Gegenwart von Zusatzmittel, um den Kunststoff zu erhalten, wobei das Polymer ein Polyolefin ist, wobei der Zusatzstoff Zitronensäure, Milchsäurebacillus, hydrolysiertem Hammeltalg, Hefe und einer Kombination davon umfasst, wobei das Vermischen bei einer Temperatur von 45-300 °C durchgeführt wird, um die wesentlichen katalytischen Eigenschaften und Beschaffenheit des Peptids/ Enzyms /Proteins in fester oder flüssiger Form zu behalten, und wobei die Mischung ferner einer Extrusion bei einer Temperatur von 100-350°C unterzogen wird.

2. Ein Verfahren zur Herstellung eines biologisch abbaubaren biokompostierbaren biodigestierbaren Kunststoffs wie in Anspruch 1 beansprucht, wobei das Enzym Papain ist.

3. Ein Verfahren zur Herstellung eines biologisch abbaubaren biokompostierbaren biodigestierbaren Kunststoffs wie in einem der vorhergehenden Ansprüche beansprucht, wobei das Protein ein pflanzliches Protein ausgewählt aus Sojabohne und Okra ist.

4. Ein Verfahren zur Herstellung eines biologisch abbaubaren biokompostierbaren biodigestierbaren Kunststoffs wie in einem der vorhergehenden Ansprüche beansprucht, wobei das Kompostierungsmittel eines wie zum Beispiel Carboxymethylcellulose ist.

5. Ein Verfahren zur Herstellung eines biologisch abbaubaren biokompostierbaren biodigestierbaren Kunststoffs wie in einem der vorhergehenden Ansprüche beansprucht, wobei das Polyolefinpolymer Polyethylen umfasst, welches ausgewählt aus linearem Niederdruck-Polyethylen (LLDPE), Polyethylen hoher Dichte (HDPE) und Polyethylen niedriger Dichte (LDPE), Polyethylen mittlerer Dichte (MDPE), EthylenVinylacetat (EVA), Ethylen-Butylacrylat (EBA) und einer Kombination davon ist.

6. Ein Verfahren zur Herstellung eines biologisch abbaubaren/biokompostierbaren/biodigestierbaren Kunststoffs wie in einem der vorhergehenden Ansprüche beansprucht, wobei die aus dem Verfahren erhaltenen Kunststofferzeugnisse Sekundärverpackung/Kunststofffilme, Westetaschen, Müllbeutel, Abfallsäcke, Agrarmulchfolien, polymere Fasern, gesponnene Vliesstoffe umfasst.

## Revendications

1. Un procédé de préparation d'un plastique biodégradable/biocompostable/biodigestible comprenant les étapes de :
- Mélanger au moins un peptide, protéine qui est choisie de protéine végétale et du lait et enzyme qui est choisie de la papaïne et la cellulase,
- Ajouter un agent de compostage,
- Combiner avec au moins un polymère en présence d'additif afin d'obtenir ledit plastique, où le polymère est une polyoléfine, dans lequel l'additif inclut de l'acide citrique, du bacille d'acide lactique, du suif de mouton hydrolysé, de la levure et une combinaison quelconque de ceux-ci, où ladite combinaison est effectuée à une température de 45-300 °C afin de conserver les propriétés catalytiques essentielles et la nature du peptide/ de l'enzyme / de la protéine sous forme solide ou liquide, et dans lequel ladite combinaison est en outre soumis à une extrusion à une température de 100-350°C.

2. Un procédé de préparation d'un plastique biodégradable/biocompostable/biodigestible tel que revendiqué dans la revendication 1, dans lequel l'enzyme est la papaïne.

3. Un procédé de préparation d'un plastique biodégradable/biocompostable/biodigestible tel que revendiqué dans l'une quelconque des revendications précédentes, dans lequel ladite protéine est une protéine végétale choisie de la graine de soja et du gombo.

4. Un procédé de préparation d'un plastique biodégradable/biocompostable/biodigestible tel que revendiqué dans l'une quelconque des revendications précédentes, dans lequel l'agent de compostage est par exemple la carboxyméthylcellulose.

5. Un procédé de préparation d'un plastique biodégradable/biocompostable/biodigestible tel que revendiqué dans l'une quelconque des revendications précédentes dans lequel le polymère de polyoléfine comprend du polyéthylène qui est choisi du polyéthylène à basse densité linéaire (PEBDL), du polyéthylène haute densité (PE-HD) et du polyéthylène basse densité (PE-LD), du polyéthylène moyenne densité (PE-MD), de l'éthylène-acétate de vinyle (EVA), de l'éthylène-acrylate de butyle (EBA) et d'une combinaison quelconque de ceux-ci.

6. Un procédé de préparation d'un plastique biodégradable/biocompostable/biodigestible tel que revendiqué dans l'une quelconque des revendications précédentes dans lequel les produits de plastique obtenus du procédé incluent des emballages secondaires/des films plastiques, des sac-gilets, des sacs poubelle, des sacs à ordures, des films de paillage agricoles, des fibres polymères, des matériaux filés non tissés.
